# EUROPEAN PATENT SPECIFICATION

(11) **EP 1 101 524 B1**
(45) Date of publication and mention of the grant of the patent: **16.06.2004**
(21) Application number: 00125010.9
(22) Date of filing: 16.11.2000
(51) Int. Cl.: B01D 53/68, B01D 53/70, B01D 53/86

(54) **Method and apparatus for treating a waste gas containing fluorine-containing compounds**
Verfahren und Einrichtung zur Behandlung von mit Fluor enthaltenden Verbindungen beladenen Abgasen
Procédé et dispositif de traitement d'un effluent gazeux chargé avec des comoposés fluorés

(30) Priority: 18.11.1999 JP 32841199
(43) Date of publication of application: 23.05.2001
(73) Proprietor: EBARA CORPORATION, Ohta-ku, Tokyo (JP)
(72) Inventor: Mori, Yoichi, Chigasaki-shi, Kanagawa-ken (JP); Kyotani, Takashi, Yokohama-shi, Kanagawa-ken (JP); Shinohara, Toyoji, Tokyo (JP)
(74) Representative: Wagner, Karl H., Dipl.-Ing.

(56) References cited:
- EP-A- 0 885 648
- EP-A- 0 916 388
- DE-A- 4 319 118
- US-A- 5 955 037

## Description

This invention relates to the treatment of a waste gas containing fluorine-containing compounds. More particularly, it relates to a method and an apparatus for efficient treatment of emissions from semiconductor fabrication plants, particularly from the steps of dry cleaning the inner surface of a fabrication apparatus and etching various kinds of deposited films with perfluorocarbons (PFCs) and halogenated hydrocarbons such as C₂F₆, C₃F₈, CHF₃, SF₆ and NF₃, said waste gases containing not only PFCs but also oxidizing gases such as F₂, Cl₂ and Br₂, acidic gases such as HF, HCl, HBr, SiF₄, SiCl₄, SiBr₄ and COF₂, as well as CO.

Semiconductor fabrication plants use many kinds of harmful gases that can potentially pollute the environment. PFCs contained in waste gases that typically result from the etching and CVD steps are suspected of causing global warning and it is urgently needed to establish an effective system for their removal.

Various breaking and recovery techniques have heretofore been proposed for PFC removal. Catalytic thermal decomposition is one of the breaking techniques and uses versatile compounds such as Pt catalyst, zeolite-base catalysts, activated charcoal, activated alumina, alkali metals, alkaline earth metals and metal oxides. However, none of these catalytic compounds have proved completely satisfactory.

The waste gases discharged from the semiconductor fabrication process contain not only PFCs but also oxidizing gases such as F₂, Cl₂ and Br₂, acidic gases such as HF, HCl, HBr, SiF₄, SiCl₄, SiBr₄ and COF₂, as well as CO; however, no method has yet been established that can realize a thorough and effective treatment of these harmful gases.

If one wants to treat oxidizing gases such as F₂, Cl₂ and Br₂ by a wet method, thorough treatment cannot be achieved by the sole use of water. If alkali agents or reducing agents are also used, not only process control but also the treatment apparatus becomes complicated and, in addition, the cost of treatment increases.

To remove CO, it has to be decomposed with oxidizers such as those based on Cu or Mn. As for PFCs, it has been proposed to use alumina as an agent for removing them (Japanese Patent Public Disclosure No. 286434/1998) and this method is characterized by contacting C₂F₆ with molecular oxygen. However, the lifetime of alumina is very short and the throughput or the amount of C₂F₆ that can be treated for 100% decomposition is only 4.8 L/L; what is more, no effective way has been proposed to deal with CO that occurs as a by-product of C₂F₆ decomposition, still less for the oxidizing gases and acidic gases that occur concomitantly with PFCs. EP-A-0 916 388 discloses that an exhaust gas containing a perfluoride compound (PFC) and SiF₄ is conducted into a silicon remover and contacted with water. A reaction water supplied from a water supplying piping and air supplied from an air supplying piping are mixed with the exhaust gas exhausted from the silicon remover. The exhaust gas containing water, air, and CF₄ is heated at 700 °C by a heater. The exhaust gas containing PFC is conducted to a catalyst layer filled with an alumina group catalyst. The PFC is decomposed to HF and CO₂ by the catalyst. The exhaust gas containing HF and CO₂ at a high temperature exhausted from the catalyst layer is cooled in a cooling apparatus. Subsequently, the exhaust gas is conducted to an acidic gas removing apparatus to remove HF. The silicon component is removed from the exhaust gas before introducing the exhaust gas into the catalyst layer.

EP-A-0 885 648 discloses a method of treatment for decomposing fluorine compounds, comprising the step of contacting a gas flow containing said fluorine compounds, which comprises fluorine as a halogen element, and any of the elements carbon, nitrogen, and sulphur as a compound with said fluorine, with a fluorine compound-decomposition catalyst in the presence of steam at a temperature in the range of approximately 200 to 800 °C to hydrolyse the fluorine compound in said gas flow, wherein said gas flow containing said fluorine compounds is contacted with a catalyst comprising Al to convert said fluorine compounds to hydrogen fluoride.

The present invention has been accomplished under these circumstances and has as an object providing a method for treating waste gases containing fluorine-containing compounds which achieves high percent decomposition of PFCs, which proves effective for a prolonged time and which simultaneously realizes effective removal of oxidizing gases, acidic gases and CO that are contained in the waste gases.

Another object of the invention is to provide an apparatus for implementing this method.

The first object of the invention can be attained by a method for treatment of a waste gas containing fluorine-containing compounds which comprises the steps as set forth in claim 1. fabrication process that contains not only perfluorocarbons and fluorinated hydrocarbons but also oxidizing gases, acidic gases and CO.

The second object of the invention can be attained by an apparatus for treatment of a waste gas containing fluorine-containing compounds, as set forth in claim 6.

In this treatment apparatus, a water scrubber may be used as the solids treating means or the acidic gas treating means. The treatment apparatus comprises an air ejector capable of adjusting the pressure in the apparatus through which the waste gas passes. The apparatus may also comprise an FT-IR analyzer for controlling the emission density of the treated gas.

The first step in the method of the invention for treating a waste gas containing fluorine-containing compounds is passing the waste gas through a solids treating means such as a water scrubber. The exit gas is passed through a thermal decomposing means packed with γ-alumina heated at 500 -1000°C, preferably 600 - 900°C, and more preferably 700 - 900°C, with H₂ and/or H₂O or H₂ and/or H₂O and O₂ being added as a decomposition assist gas, so that PFCs, oxidizing gases and CO are completely decomposed into acidic gases and CO₂. The generated acidic gases are removed with an acidic gas treating means such as a water scrubber.

The invention may incorporate an FT-IR analyser for controlling the emission density of the treated gas.

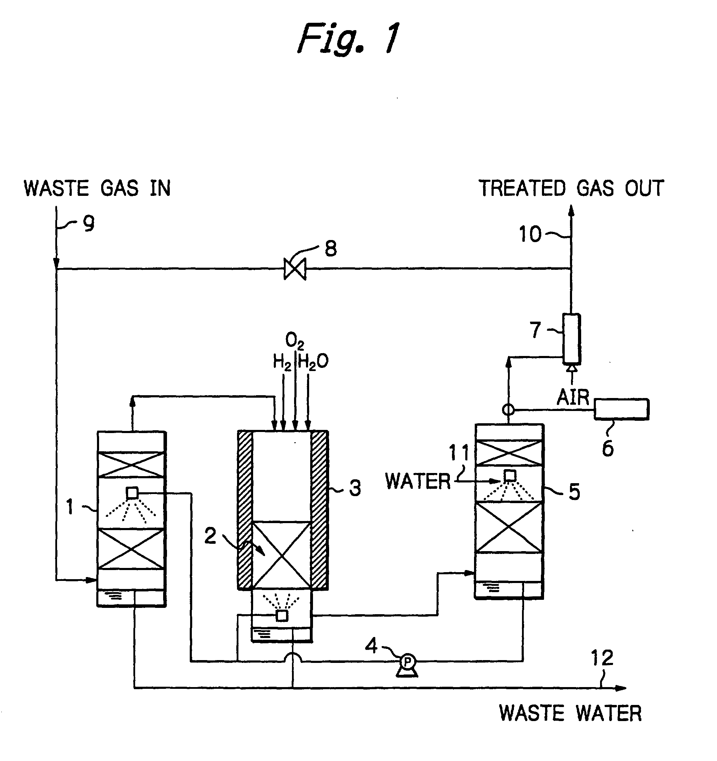

Fig. 1 is a flowsheet for the waste gas treatment apparatus of the invention.

The present invention is described below in detail. In the first step, a waste gas containing PFCs, oxidizing gases, acidic gases and CO is passed through a solids treating means such as a water scrubber in order to remove not only the solids such as SiO₂ in the waste gas but also Si compounds such as SiF₄, SiCl₄ and SiBr₄ that may potentially solidify in the thermal decomposing means at the next stage. If the waste gas is directly introduced into the thermal decomposing means without being passed through the solids treating means, clogging or other blocking problems will occur, potentially preventing the waste gas from smoothly flowing through the packed γ-alumina layer. The performance of γ-alumina may also deteriorate. By passing the waste gas through the solids treating means, the solids and the acidic gases containing Si compounds are removed whereas part of oxidizing gases such as F₂, Cl₂ and Br₂ as well as all volumes of PFCs and CO are discharged.

The waste gas emerging from the solids treating means is then introduced into the thermal decomposing means so that it is decomposed through contact with γ-alumina heated at 500 - 1000°C, preferably 600 - 900°C, more preferably 700 - 900°C. On this occasion, H₂ and/or H₂O; or H₂ and/or H₂O and O₂ are added to the waste gas as a decomposition assist gas so that the components of the waste gas are decomposed into acidic gases and CO₂ according to the following reaction schemes: ${\text{CF}}_{\text{4}} {\text{+ 2H}}_{\text{2}} {\text{+ O}}_{\text{2}} {\text{→ CO}}_{\text{2}} \text{+ 4HF}$${\text{CF}}_{\text{4}} {\text{+ 2H}}_{\text{2}} {\text{O → CO}}_{\text{2}} \text{+ 4HF}$${\text{F}}_{\text{2}} {\text{+ H}}_{\text{2}} \text{→ 2HF}$${\text{2F}}_{\text{2}} {\text{+ 2H}}_{\text{2}} {\text{O → 4HF + O}}_{\text{2}}$${\text{2CO + O}}_{\text{2}} {\text{→ 2CO}}_{\text{2}}$

Thus, PFC reacts with H₂ and O₂ or H₂O to be decomposed into CO₂ and HF. Acidic gases such as F₂ react with H₂ or H₂O to be decomposed to another acidic gas HF. Carbon monoxide (CO) is oxidized to CO₂.

As for PFC, H₂ or H₂O is added in moles at least equal to the moles necessary for the F atoms in the PFC to be converted to HF and O₂ is added in moles at least equal to the moles necessary for the C atoms in the PFC to be converted to CO₂. Preferably, O₂ is added in moles which are at least equal to the sum of one mole and the above-defined minimum number of moles. As for oxidizing gases, H₂ is introduced in moles at least equal to the moles necessary for the halogen atoms (X) in the oxidizing gas to be converted to an acidic gas (HX).

The waste gas leaving the thermal decomposing means only contains the acidic gases (HX) and CO₂ and by subsequent treatment with an acidic gas treating means such as a water scrubber, the acidic gases are completely removed.

The alumina to be used in the invention may have a γ-crystalline structure without a uniform pore distribution. While the shape of the alumina is not limited in any particular way, spheres are easy to handle and, hence, preferred. To the extent that will not unduly increase the resistance to the passage of the waste gas, the particle size of γ-alumina should be as small as possible, preferably between 0.8 mm and 2.6 mm. The γ-alumina may be held at between 500°C and 1000°C, preferably 600°C and 900°C and more preferably 700°C and 900°C during the passage of the waste gas.

The solids treating means and the acidic gas treating means are preferably a packed column or a spray column on the condition that they are adapted to spray water. The thermal decomposing means should be adapted to permit the introduction of H₂ and/or H₂O or H₂ and/or H₂O and O₂ as a decomposition assist gas.

Fig. 1 is a flowsheet for the waste gas treatment apparatus of the invention. It generally comprises the solids treating means 1, the γ-alumina packed layer 2, the thermal decomposing means 3, a cleaning water circulating pump 4, the acidic gas treating means 5, an Fourier transform-Infrared (FT-IR) analyzer 6, an air ejector 7 and a bypass valve 8.

A waste gas 9 containing PFCs, oxidizing gases, acidic gases and CO is first passed through the spray column (solids treating means) 1 so as to remove the solids and Si compounds. The waste gas is then passed through the thermal decomposing means 3 which is also supplied with H₂, O₂ and H₂O to decompose the PFCs, oxidizing gases and CO into acidic gases and CO₂. The acidic gases are removed by passage through the next spray column (acidic gas treating means) 5, from which the treated gas 10 emerges.

The air ejector 7 is installed to control the pressure in each of the treating means and the FT-IR analyzer 6 is provided to monitor the treated gas.

Spray water 11 is introduced into the acidic gas treating means 5 and the spent water is forced to the solids treating means 1 with the cleaning water circulating pump 4; the water is used in spraying there and discharged as wastewater 12.

The following examples are provided for the purpose of further illustrating the present invention but are in no way to be taken as limiting.

### Example 1

A quartz column of 25 mm^{φ} was packed with γ-alumina to a height of 100 mm. The γ-alumina was a commercial product of Mizusawa Kagaku K.K. (NEOBEAD GB-08) having a particle size of 0.8 mm. The quartz column was installed in a ceramic electric furnace and the alumina layer was heated at 800°C.

In addition to CF₄ diluted with N₂ gas, H₂ and O₂ were supplied as decomposition assist gases, the amount of H₂ being such that the number of H atoms was at least equal to the number of F atoms in CF₄ and the amount of O₂ being at least equimolar to the amount of H₂ introduced. These gases were flowed into the column at a total rate of 408 sccm and their entrance concentrations were 1% (CF₄), 3.0% (H₂) and 5.7% (O₂).

In order to evaluate the performance of the treatment system, the exit gas was analyzed periodically and the passage of the CF₄ gas was stopped when the removal of CF₄ dropped below 98%. The throughput was determined from the amount of CF₄ that had been passed through the system. The analysis of CF₄ and other gases was conducted with a gas chromatographic apparatus equipped with a mass detector.

As it turned out, the removal of CF₄ dropped to 98% when its passage continued for 920 min. At this point in time, the throughput as determined from the quantity of the supplied CF₄ was 77 L/L. Throughout the experiment, the concentration of CO emission was below the tolerable level (25 ppm).

### Comparative Example 1

An experiment was conducted using the same equipment as in Example 1 that was packed with the same γ-alumina in the same amount and heated to the same temperature. The total gas flow rate was 408 sccm; the feed gas was a mixture of N₂-diluted CF₄ and SiF₄; in addition, H₂ and O₂ were supplied as decomposition assist gases, the amount of H₂ being such that the number of H atoms was at least equal to the total number of F atoms in CF₄ and SiF₄ and the amount of O₂ being at least equimolar to the amount of H₂ introduced. These gases were flowed into the column at respective concentrations of 0.95% (CF₄), 0.97% (SiF₄), 5.3% (H₂) and 6.0% (O₂).

As it turned out, the removal of CF₄ dropped below 98% when the passage of the CF₄/SiF₄ gas continued for 510 minutes. At this point in time, the throughput was 40 L/L, which was nearly one half the throughput for the case where only CF₄ gas was supplied. Throughout the experiment, the concentration of CO was below the tolerable level.

### Example 2

An experiment was conducted using the same equipment as in Example 1 that was packed with the same γ-alumina in the same amount and heated to the same temperature. The total gas flow rate was 408 sccm; the feed gas was a mixture of N₂-diluted CF₄ and F₂; in addition, H₂ and O₂ were supplied as decomposition assist gases, the amount of H₂ being such that the number of H atoms was at least equal to the total number of F atoms in CF₄ and F₂ and the amount of O₂ being at least equimolar to the amount of H₂ introduced. These gases were flowed into the column at respective concentrations of 0.92% (CF₄), 1.1% (F₂), 5.0% (H₂) and 6.0% (O₂).

As it turned out, the removal of CF₄ dropped below 98% when the passage of the CF₄/F₂ gas continued for 25 hours. At this point in time, the throughput was 115 L/L, which was 1.51 times higher than the throughput for the case where only CF₄ gas was supplied. Throughout the experiment, the concentrations of CO and F₂ were below the tolerable levels (1 ppm for F₂), provided that F₂ had been decomposed into HF.

### Reference Example 1

An experiment was conducted using the same equipment as in Example 1 that was packed with the same γ-alumina in the same amount and heated to the same temperature. The total gas flow rate was 408 sccm; in addition to N₂-diluted CO, O₂ was supplied in moles at least equal to the moles necessary for CO to be converted to CO₂; their respective entrance concentrations were 1.4% (CO) and 5.7% (O₂). Throughout the passage of the feed gas for 30 minutes, the concentration of CO was below the detection limit (2 ppm); all of CO had been oxidized to CO₂.

### Comparative Example 2

An experiment was conducted using the same equipment as in Example 1 that was packed with the same γ-alumina in the same amount and heated to the same temperature. The total gas flow rate was 408 sccm; in addition to N₂-diluted CO, H₂O was supplied at a rate of 0.090 mL/min which was 22 times as much as CO; the entrance concentration of CO was 1.3%.

As it turned out, 1000 ppm of CO leaked as a result of 15-min passage of the feed gas. Obviously, the concentration of CO could not be reduced to below the tolerable level (25 ppm) by the sole addition of H₂O.

### Reference Example 2

An experiment was conducted using the same equipment as in Example 1 that was packed with the same γ-alumina in the same amount and heated to the same temperature. The total gas flow rate was 408 sccm; in addition to N₂-diluted CO, H₂O was supplied at a rate of 0.090 mL/min which was 18 times as much as CO and O₂ was supplied in moles at least equal to the moles necessary for CO to be converted to CO₂; the entrance concentrations of CO and O₂ were 1.5% and 3.4%, respectively.

As it turned out, the concentration of CO had been reduced to below the detection limit (2 ppm) after the passage of the feed gas for 3 hours. Obviously, CO was oxidized to CO₂ by addition of O₂.

### Example 3

An experiment was conducted using the same equipment as in Example 1 that was packed with the same γ-alumina in the same amount and heated to 700°C. The total gas flow rate was 408 sccm; in addition to N₂-diluted CF₄, H₂O was supplied at a rate of 0.040 mL/min which was 14 times as much as CF₄ and O₂ was supplied in moles at least equal to the moles necessary for the C atom in CF₄ to be converted to CO₂; the entrance concentrations of CF₄ and O₂ were 0.89% and 3.0%, respectively.

As it turned out, the removal of CF₄ dropped below 98% when the passage of the feed gas continued for 23 hours. At this point in time, the throughput was 110 L/L, which was 1.4 times higher than the throughput of CF₄ treatment in the presence of added H₂ and O₂. Throughout the experiment, the concentration of CO was below the tolerable level.

### Comparative Example 3

In order to evaluate the effectiveness of the wet process in treating oxidizing gases and acidic gases, a water cleaning column (210 mm^{φ} x 430 mm^{H} with a Raschig ring packed to a height of 170 mm) was supplied with a waste gas at a total rate of 60 L/min and spray water at a rate of 3.5 L/min. The waste gas was prepared from F₂, SiF₄ and Cl₂ which had entrance concentrations of 1100 ppm, 1600 ppm and 5100 ppm, respectively. At the exit of the column, F₂, SiF₄ and Cl₂ were detected at concentrations of 11 ppm, < 1 ppm, and 3300 ppm, respectively. Obviously, SiF₄ was effectively treated but F₂ and Cl₂ leaked out.

### Example 4

A water cleaning column (210 mm^{φ} x 430 mm^{H} with a Raschig ring packed to a height of 170 mm) was used as a solids treating means. This column was combined with a thermal decomposing means comprising a preheating chamber and a catalyst packed chamber and an acidic gas treating means which was the same as the water cleaning column. The exit gas leaving the acidic gas treating means was monitored with an FT-IR analyzer (Infinity 6000 of MATTSON) and the pressure in the experimental system was controlled with an air ejector of Daito Seisakusho K.K. The solids treating means and the acidic gas treating means were supplied with cleaning water at respective flow rates of 2 L/min and 4 L/min. The thermal decomposing means was supplied with air and pure water at respective flow rates of 10 L/min and 2.4 mL/min. The catalyst was 15 L of γ-alumina (NEOBEAD GB-08 of Mizusawa Kagaku K.K.)

A gas dryer (MD-70-72P of PERMAPUR) was installed ahead of the FT-IR analyzer for removing the moisture in the waste gas. Air was supplied into the air ejector at a rate of 30 L/min so that the pressure in the system was kept at a negative value of -0.5 kPa. A waste gas was introduced at a flow rate of 60 L/min and it was prepared from a N₂ base containing CF₄, SiF₄, F₂ and CO at respective concentrations of 0.5%, 0.3%, 0.3% and 0.3%. The waste gas was first passed through the solids treating means, then passed through the thermal decomposing means in the presence of added water and O₂, with the catalyst bed being heated at 700°C. The waste gas was subsequently passed through the acidic gas treating means and the treated gas was continuously analyzed by FT-IR. After the passage of the waste gas for 10 hours, CO₂ was detected in an amount of 6900 ppm but each of CF₄, SiF₄, HF and CO had been treated to below 1 ppm. No F₂ was detected by ion chromatographic analysis.

### Example 5

A waste gas treatment was conducted with the same experimental setup under the same conditions as in Example 4, except that CF₄ was replaced by C₂F₆ and that the waste gas was prepared from a N₂ base containing C₂F₆, SiF₄, F₂ and CO at respective concentrations of 0.5%, 0.3%, 0.3% and 0.3%. The waste gas was passed through the solids treating means, the thermal decomposing means and the acidic gas treating means.

The treated gas emerging from the acidic gas treating means was continuously analyzed by FT-IR. After the passage of the waste gas for 10 hours, CO₂ was detected in an amount of 11000 ppm but each of C₂F₆, SiF₄, HF and CO had been treated to below 1 ppm. No F₂ was detected by ion chromatographic analysis.

According to the invention, harmful waste gases from the semiconductor fabrication process that contain PFCs, oxidizing gases, acidic gases and CO and which are a potential accelerator of global warming can be treated in such a way that high percent decomposition is maintained for a prolonged time.

## Claims

1. A method for treatment of a waste gas containing fluorine-containing compounds which comprises the steps of:
separating the solids from the waste gas (9),
adding H₂ and/or H₂O or H₂ and/or H₂O and O₂ as a decomposition assist gas,
thermally decomposing the waste gas by contact with γ-alumina at 500 - 1000 °C, and
removing acidic gases from the decomposed waste gas,
the pressure in each of the above steps being controlled with an air ejector (7) at a place after removing the acidic gases.

2. The method according to claim 1, wherein the temperature used in the thermally decomposing step ranges from 600 -900 °C.

3. The method according to claim 1, wherein said waste gas (9) containing fluorine-containing compounds contains perfluoro-carbons and fluorinated hydrocarbons as well as oxidizing gases, acidic gases and CO.

4. The method according to claim 3, wherein said waste gas (9) containing fluorine-containing compounds is a waste gas from a semiconductor fabrication process.

5. The method according to claim 1, wherein the treated gas after removing acidic gases is monitored by an FT-IR analyzer (6).

6. An apparatus for treatment of a waste gas (9) containing fluorine-containing compounds which comprises
a solids treating means (1) for separating the solids from a waste gas (9) containing fluorine-containing compounds,
an addition means for adding H₂ and/or H₂O or H₂ and/or H₂O and O₂ as a decomposition assist gas to the waste gas leaving the solids treating means (1),
a thermal decomposing means (3) that is packed with γ-alumina (2) heated at 500 - 1000 °C and which thermally decomposes the waste gas to which the decomposition assist gas has been added,
an acidic gas treating means (5) for removing acidic gases from the thermally decomposed waste gas,
an air ejector (7) for controlling the pressure in each of the treating means, and
channels for connecting these means in sequence.

7. The apparatus according to claim 6, wherein said solids treating means (1) or said acidic gas treating means (5) is a water scrubber.

8. The apparatus according to claim 6, which further comprises an FT-IR analyzer (6) for controlling the emission density of the treated gas (10).

9. The apparatus according to claim 7, wherein said analyzer (6) is installed at a position adjacent to the air ejector (7).

10. The apparatus according to any of claims 6 to 10, further comprising a bypass having a bypass valve (8) and being installed between a waste-gas charging line (9) and a treated gas-emerging line (10).

## Patentansprüche

1. Ein Verfahren zur Behandlung von einem Abgas, welches Fluor enthaltende Verbindungen aufweist, wobei die folgenden Schritte vorgesehen sind:
Trennen der Feststoffe von dem Abgas (9),
Hinzufügen von H₂ und/oder H₂O oder H₂ und/oder H₂O und O₂, als ein Zerlegungsunterstützungsgas,
thermische Zerlegung des Abgases durch Kontakt mit γ-Aluminiumoxid bei 500 bis 1000 °C, und
Entfernen sauerer Gase aus dem zerlegten Abgas,
wobei der Druck in jedem der obigen Schritte mit einem Luftejektor (7) gesteuert wird, und zwar an einer Stelle nach der Entfernung der sauren Gase.

2. Verfahren nach Anspruch 1, wobei die bei dem thermischen Zerlegungsschritt verwendete Temperatur im Bereich von 600 bis 900 °C liegt.

3. Verfahren nach Anspruch 1, wobei das Abgas (9), welches Fluor enthaltende Verbindungen enthält, Perfluorkohlenstoffe und fluorierte Kohlenwasserstoffe und auch Oxidationsgase, Säuregase und CO₂ enthält.

4. Verfahren nach Anspruch 3, wobei das Fluor enthaltende Verbindungen aufweisende Abgas (9) ein Abgas von einem Halbleiterherstellungsprozess ist.

5. Verfahren nach Anspruch 1, wobei das behandelte Gas nach Entfernen der sauren Gase durch einen FT-IR Analysator (6) überwacht wird.

6. Vorrichtung zur Behandlung eines Abgases (9), welches Fluor enthaltende Verbindungen enthält, und wobei Folgendes vorgesehen ist:
Feststoffbehandlungsmittel (1) zum Trennen der Feststoffe von einem Abgas (9), welches Fluor enthaltende Verbindungen enthält,
Zufügungsmittel zum Hinzufügen von H₂ und/oder H₂O oder H₂ und/oder H₂O und O₂, als ein Zerlegungsunterstützungsgas zu dem Abgas, welches die Feststoffbehandlungsmittel (1) verlässt,
thermisches Zerlegungsmittel (3) gepackt mit γ-Aluminiumoxid (2) erhitzt auf 500 bis 1000 °C, und welches das Abgas thermisch zerlegt zu dem das Zerlegungsunterstützungsgas hinzugefügt wurde,
Säure-Gas-Behandlungsmittel (5) zur Entfernung von sauren Gasen aus dem thermisch zerlegten Abgas,
ein Luftejektor (7) zur Steuerung des Drucks in jedem der Behandlungsmittel, und Kanäle zur Verbindung dieser Mittel in einer Sequenz.

7. Vorrichtung nach Anspruch 6, wobei die Feststoffbehandlungsmittel (1) oder die Säure-Gas-Behandlungsmittel (5) eine Wasserscrubber sind, oder diesen aufweisen.

8. Vorrichtung nach Anspruch 6, wobei ferner ein FT-IR Analysator (6) vorgesehen ist, um die Emissionsdichte des behandelnden Gases (10) zu steuern bzw. zu kontrollieren.

9. Vorrichtung nach Anspruch 7, wobei der Analysator (6) an einer Position benachbart zu dem Luftejektor (7) eingebaut ist.

10. Nach einem der Ansprüche 6 bis 10, wobei ferner ein Bypass oder eine Umleitung vorgesehen ist, mit einem Bypass oder Umleitungsventil (8), und zwar installiert zwischen der Abgasladeleitung (9) und einer Behandlungsgasaustrittsleitung (10).

## Revendications

1. Procédé de traitement d'un effluent gazeux chargé avec des composés fluorés qui comprend les étapes consistant à :
séparer les solides de l'effluent gazeux (9),
ajouter du H₂ et/ou du H₂O ou du H₂ et/ou du H₂O et du O₂ en tant que gaz facilitant la décomposition,
décomposer thermiquement l'effluent gazeux en le mettant en contact avec de l'γ-alumine à 500 à 1000°C, et
à éliminer les gaz acides de l'effluent gazeux décomposé,
la pression dans chacune des étapes ci-dessus étant contrôlée à l'aide d'un éjecteur à air (7) situé à un endroit précis après l'élimination des gaz acides.

2. Procédé selon la revendication 1, dans lequel la température utilisée lors de l'étape de décomposition thermique est située entre 600 et 900°C.

3. Procédé selon la revendication 1, dans lequel ledit effluent gazeux (9) chargé avec des composés fluorés contient des hydrocarbures perfluorés et des hydrocarbures fluorés ainsi que des gaz oxydants, des gaz acides et du CO.

4. Procédé selon la revendication 3, dans lequel ledit effluent gazeux (9) composés fluorés est un effluent gazeux provenant d'un processus de fabrication de semiconducteurs.

5. Procédé selon la revendication 1, dans lequel le gaz traité après avoir éliminé les gaz acides est surveillé par un analyseur FT-IR (6).

6. Appareil pour le traitement d'un effluent gazeux (9) chargé avec des composés fluorés qui comprend
un moyen de traitement des solides (1) pour séparer les solides d'un effluent gazeux (9) chargé avec des composés fluorés,
un moyen d'ajout pour ajouter du H₂ et/ou du H₂O ou du H₂ et/ou du H₂O et du O₂ en tant que gaz facilitant la décomposition à l'affluent gazeux quittant le moyen de traitement des solides (1),
un moyen de décomposition thermique (3) qui est emballé de γ-alumine (2) chauffée à 500 à 1000°C et qui décompose thermiquement l'effluent gazeux auquel le gaz facilitant la décomposition a été ajouté,
un moyen de traitement de gaz acides (5) pour éliminer les gaz acides de l'effluent gazeux thermiquement décomposé,
un éjecteur à air (7) pour contrôler la pression dans chacun des moyens de traitement, et
des canaux pour relier ces moyens en séquence.

7. Appareil selon la revendication 6, dans lequel ledit moyen de traitement des solides (1) ou ledit moyen de traitement des gaz acides (5) est un épurateur à eau.

8. Appareil selon la revendication 6, qui comprend en outre un analyseur FT-IR (6) pour contrôler la densité d'émission du gaz traité (10).

9. Appareil selon la revendication 7, dans lequel ledit analyseur (6) est installé à une position adjacente à l'éjecteur à air (7).

10. Appareil selon l'une quelconque des revendications 6 à 10, comprenant en outre une dérivation possédant une soupape de dérivation (8) et étant installée entre une conduite de charge de gaz résiduaire (9) et une conduite d'émergence de gaz traité (10).
